# EUROPÄISCHE PATENTSCHRIFT

(11) **EP 3 115 116 B1**
(45) Veröffentlichungstag und Bekanntmachung des Hinweises auf die Patenterteilung: **09.11.2022**
(21) Anmeldenummer: 16178197.6
(22) Anmeldetag: 06.07.2016
(51) Int. Cl.: B08B 5/02, E03F 7/12, B08B 17/06, G01N 21/15, F16L 101/30

(54) **REINIGUNGSSYSTEM**
CLEANING SYSTEM
SYSTEME DE NETTOYAGE

(30) Priorität: 06.07.2015 DE 202015103567 U
(43) Veröffentlichungstag der Anmeldung: 11.01.2017
(73) Patentinhaber: iPEK International GmbH, 87477 Sulzberg (DE)
(72) Erfinder: Daiber, Frank, 87499 Wildpoldsried (DE); Zahnd, Fabian, 87437 Kempten (DE); Henn, Peter, 87452 Krugzell (DE)
(74) Vertreter: 2s-ip Schramm Schneider Bertagnoll Patent- und Rechtsanwälte Part mbB

(56) Entgegenhaltungen:
- EP-A1- 1 147 825
- DE-A1- 19 601 814
- US-A- 3 744 873
- US-A- 5 879 626

## Beschreibung

### Gebiet der Erfindung

Die Erfindung betrifft eine Kanalinspektions- und/oder Wartungseinrichtung zur Inspektion bzw. Wartung eines Kanals, sowie ein Kanalinspektions- und/oder Wartungssystem mit einer erfindungsgemäßen Kanalinspektions- und/oder Wartungseinrichtung, wobei die Kanalinspektions- und/oder Wartungseinrichtung eine Reinigungseinrichtung aufweist.

### Hintergrund der Erfindung

Kanalinspektions- und/oder Wartungssysteme werden in einen Kanal eingebracht und in dem Kanal vorgeschoben bzw. verfahren, um den Kanal zu inspizieren bzw. zu warten oder zu sanieren. Derartige Kanalinspektions- und/oder Wartungssysteme weisen üblicherweise Sensoren und/oder Bildaufnahmeeinrichtungen auf, mit denen der Zustand des Kanals anhand der mit den Sensoren aufgenommenen Messwerte bzw. anhand der mit der Bildaufnahmeeinrichtung aufgezeichneten Bilder bewertet werden kann.

Durch Verschmutzungen im Kanal, Tropfwasser oder durch eine falsche Bedienung des Systems kann es vorkommen, dass ein Sensor oder eine Linse der Bildaufnahmeeinrichtung verschmutzt werden. Die Verschmutzung eines Sensors oder der Linse der Bildaufnahmeeinrichtung kann zu fehlerhaften Messwerten bzw. zu unklaren Bildaufnahmen führen. Je nach Verschmutzungsgrad muss daher ein Inspektions- und/oder Wartungsvorgang unterbrochen werden, um die verschmutzten Sensoren bzw. die verschmutzte Linse der Bildaufnahmeeinrichtung zu reinigen. Das Inspektions- und/oder Wartungssystem muss hierzu aus dem Kanal herausgenommen werden, um eine manuelle Reinigung durchführen zu können. Der Inspektions- und/oder Wartungsvorgangs wird so erheblich verzögert.

In der Vergangenheit ist versucht worden, dieses Problem mit Hilfe eines Scheibenwischers zu lösen. Diese Lösung bietet allerdings nur dann ein praktikables Reinigungsergebnis, wenn die zu reinigende Oberfläche weitestgehend eben bzw. flach ausgestaltet ist. Ein weiterer Nachteil dieser Lösung besteht darin, dass die beweglichen Teile der Scheibenwischereinrichtung zumindest während eines Reinigungsvorgangs selbst verschmutzt werden können, was den Reinigungserfolg und die Funktionstüchtigkeit der Scheibenwischereinrichtung beeinträchtigen kann. Zudem unterliegen zumindest die Wischeinheiten der Scheibenwischereinrichtung einem Verschleiß, sodass diese regelmäßig ausgewechselt werden müssen. Ein zunehmender Verschleiß der Wischeinheiten führt zudem dazu, dass der Reinigungserfolg zunehmend abnimmt.

Aus der EP 1 147 825 EP und aus der DE 102 55 221 A1 sind jeweils ein Spülkopf zum Reinigen von Rohrleitungen bekannt. Der Spülkopf weist an dem vorderen Ende eine Kamera auf. Der Spülkopf ist mit einer Hochdruckleitung gekoppelt, über die Wasser dem Spülkopf zugeführt wird. Über nach hinten ausgerichtete Spüldüsen tritt das zugeführte Wasser aus und reinigt so die Innenwandung des Rohres. An dem vorderen Ende sind zudem Spritzdüsen angeordnet, die zur Kamera hin ausgerichtet sind. Über einen Zuleitungskanal sind die Spritzdüsen mit der Hochdruckleitung verbunden, sodass das dem Spülkopf zugeführte Wasser auch zum Reinigen der Kamera verwendet werden kann.

Ferner ist aus der DE 196 01 814 A eine fahrbare Vorrichtung zum Beseitigen von Sprengstoffablagerungen in Kanalrohren bekannt. An einem Fahrwagen ist eine Luftlanze angeordnet. Die Luftlanze weist an dem vorderen Ende eine Düse auf, über welche ein gasförmiges Strahlmedium abgegeben wird. Das gasförmige Strahlmedium wird der Luftlanze auf dem Fahrwagen von außen über einen Schlauch zugeführt. Zudem ist eine Kamera vorgesehen. Sowohl die Kamera als auch die Luftlanze sind an einem Schwenkkopf befestigt, sodass Kamera und Luftlanze stets synchron relativ zum Fahrwagen geschwenkt werden können. An einer Seitwandung weist die Luftlanze eine Öffnung auf, die auf das Objektiv der Kamera gerichtet ist.

US 5,879,626 betrifft ein Sensorsystem, bei dem Staub auf einer Linse mit Druckluft entfernt werden kann, wobei die Druckluft über eine Druckluftzufuhr zugeführt wird. Unterhalb der Linse ist ein länglicher Schlitz vorgesehen, der zur Linse hin ausgerichtet ist und aus dem die Druckluft austritt.

### Aufgabe der Erfindung

Aufgabe der vorliegenden Erfindung ist es daher, Lösungen bereitzustellen, die die aus dem Stand der Technik bekannten Nachteile zumindest teilweise vermeiden und die einen über die Zeit gleichbleibenden Reinigungserfolg gewährleisten. Zudem soll die Lösung weitestgehend verschleiß- und wartungsfrei sein.

### Erfindungsgemäße Lösung

Erfindungsgemäß wird diese Aufgabe mit einer Kanalinspektions- und/oder Wartungseinrichtung sowie mit einem Kanalinspektions- und/oder Wartungssystem, welches eine erfindungsgemäße Kanalinspektions- und/oder Wartungseinrichtung aufweist, nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach eine Kanalinspektions- und/oder Wartungseinrichtung, gemäß Anspruch 1, aufweisend
- ein Gehäuse,
- eine im Gehäuse angeordnete Sensoreinrichtung mit zumindest einem Sensorelement und
- eine Reinigungseinrichtung zum Reinigen zumindest eines Teils der Sensoreinrichtung,
wobei die Reinigungseinrichtung aufweist:
- einen Druckraum zur Aufnahme eines unter Druck stehenden Gases, wobei der Druckraum außerhalb des Gehäuses angeordnet ist und eine Druckflasche umfasst,
- zumindest eine Düse mit einer zum reinigenden Teil der Sensoreinrichtung hin ausgerichteten oder ausrichtbaren Austrittsöffnung, und
- ein Ventil, welches operativ zwischen dem Druckraum und der Düse angeordnet ist, zum Steuern einer Beaufschlagung des zu reinigenden Teils der Sensoreinrichtung mit dem Gas,
wobei
- die zumindest eine Düse außerhalb des Gehäuses angeordnet und schwenkbar ausgestaltet ist, um den Winkel des Gasaustrittskanals der Düse relativ zum zu reinigenden Teil der Sensoreinrichtung zu ändern, und / oder
- die Sensoreinrichtung schwenkbar an der Kanalinspektions- und/oder Wartungseinrichtung angelenkt ist, um den zu reinigenden Teil der Sensoreinrichtung zur Austrittsöffnung der Düse hin auszurichten.

Diese Ausgestaltung hat den Vorteil, dass die Reinigungseinrichtung keine Wischeinheiten oder sonstige Einheiten aufweist, die selbst Verschleiß und/oder einer Verschmutzung unterliegen können. Dadurch muss ein Inspektions- und/oder Wartungsvorgang aufgrund verschmutzter Einheiten der Reinigungseinrichtung nicht unterbrochen werden, und es kann ein über die Zeit gleichbleibendes Reinigungsergebnis gewährleistet werden. Selbst eine verschmutzte oder verstopfte Düse der Reinigungseinrichtung der erfindungsgemäßen Kanalinspektions- und/oder Wartungseinrichtung führt nicht zu einem Abbruch eines Inspektions- und/oder Wartungsvorgangs, denn der Düsenkanal kann mit dem unter Druck stehenden Gas gereinigt bzw. offengehalten werden. Zudem werden die notwendigen Wartungsarbeiten an der Reinigungseinrichtung auf ein Minimum reduziert, weil lediglich der Druckraum bei Bedarf mit dem Gas aufgefüllt werden muss.

Ein weiterer Vorteil, insbesondere gegenüber Reinigungseinrichtungen, die als Reinigungsmedium ein Fluid, etwa Wasser, verwenden, liegt darin, dass keinerlei Fluidzuführungen, etwa Schläuche oder Druckschläuche, an bzw. mit der Kanalinspektions- und/oder Wartungseinrichtung mitgeführt werden müssen. Denn ein Gas, etwa Luft, kann erheblich besser bzw. mehr komprimiert werden als ein Fluid, etwa Wasser, sodass in dem Druckraum genügend Gas aufgenommen werden kann, das für einen kompletten oder mehrere Inspektions- oder Wartungsvorgänge ausreicht. Beispielsweise weist Luft ein Kompressionsmodul von 1,42^{∗}10⁵ Pa auf, während Wasser lediglich ein Kompressionsmodul von 2,08^{∗}10⁹ Pa aufweist. Dieser Vorteil wirkt sich insbesondere bei selbstfahrenden (z.B. Akkumulator betriebenen) Kanalinspektions- und/oder Wartungseinrichtung aus, die über eine drahtlose Kommunikationsverbindung mit einer außerhalb des Kanals angeordneten Basiseinheit kommunizieren, weil keine schweren Wasserschläuche mitgeführt bzw. hinterhergezogen werden müssen. Die gesamte Kanalinspektions- und/oder Wartungseinrichtung kann so erheblich kompakter ausgestaltet werden.

In einer Ausgestaltung der erfindungsgemäßen Kanalinspektions- und/oder Wartungseinrichtung ist zumindest eine Zuleitung vorgesehen, welche den Druckraum mit der zumindest einen Düse verbindet, wobei das Ventil in der Zuleitung angeordnet ist.

In der Zuleitung kann zudem zwischen dem Ventil und der Düse ein Rückschlagventil angeordnet sein, welches verhindert, dass Schmutz durch die Zuleitung bis an das Ventil gelangen kann.

Das Ventil zum Steuern der Beaufschlagung des zu reinigenden Teils der Sensoreinrichtung mit dem Gas kann ein elektromagnetisch betätigbares Ventil umfassen.

In einer Ausgestaltung der Erfindung kann das Gehäuse der Kanalinspektions- und/oder Wartungseinrichtung druckdicht ausgestaltet sein.

In einer vorteilhaften Ausgestaltung der Erfindung können die Düsen radial verteilt um die Sensoreinrichtung herum angeordnet sein.

Die Sensoreinrichtung kann ein Schutzglas aufweisen, das axial vor dem zumindest einen Sensorelement angeordnet ist, wobei der zu reinigende Teil der Sensoreinrichtung das Schutzglas ist.

In einer Ausgestaltung der Erfindung kann hinter dem Schutzglas, das heißt an der dem zumindest einen Sensorelement zugewandten Seite des Schutzglases, zumindest ein Schmutzsensor, insbesondere eine Licht- oder Infrarotlicht-Reflexionssensor, angeordnet sein, zum Erfassen eines Verschmutzungsgrades des Schutzglases. Damit wird es möglich, die Reinigungseinrichtung, vorzugsweise automatisch, nur dann zu aktivieren, wenn das Schutzglas einen vorbestimmten Verschmutzungsgrad erreicht hat.

Die Kanalinspektions- und/oder Wartungseinrichtung kann eine Steuereinrichtung aufweisen, die operativ mit dem Schmutzsensor und mit dem Ventil gekoppelt ist und die angepasst ist, das Ventil in Abhängigkeit von dem mit dem Schmutzsensor erfassten Verschmutzungsgrad zu steuern.

Das Sensorelement kann ein Kameramodul, ein Temperatursensor, ein Abstandssensor, ein Drucksensor oder ein Gassensor sein. Die Erfindung ist jedoch nicht auf diese Sensoren bzw. Kameramodul beschränkt. Vielmehr können beliebige Sensoren vorgesehen sein.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erfindungsgemäße Kanalinspektions- und/oder Wartungseinrichtung in einer Schnittansicht;
- Fig. 2: einen vergrößerten Ausschnitt der in Fig. 1 gezeigten Kanalinspektions- und/oder Wartungseinrichtung;
- Fig. 3: eine alternative Ausgestaltung der in Fig. 1 gezeigten Kanalinspektions- und/oder Wartungseinrichtung;
- Fig. 4: eine erfindungsgemäße Kanalinspektions- und/oder Wartungseinrichtung, die an einem Fahrwagen befestigt ist;
- Fig. 5: eine erfindungsgemäße Kanalinspektions- und/oder Wartungseinrichtung, die an einem Fahrwagen befestigt ist, wobei der Druckraum im Fahrwagen angeordnet ist;
- Fig. 6: eine alternative Ausgestaltung einer erfindungsgemäßen Kanalinspektions- und/oder Wartungseinrichtung, die an einem Fahrwagen angeordnet ist und wobei ein Gehäuse mit dem Sensorelement schwenkbar ausgestaltet ist;
- Fig. 7: ein Beispiel einer erfindungsgemäßen Kanalinspektions- und/oder Wartungseinrichtung mit einem Sensorelement;
- Fig. 8: ein Ausschnitt einer erfindungsgemäßen Kanalinspektions- und/oder Wartungseinrichtung mit einem Schmutzsensor; und
- Fig. 9: einen Ausschnitt der in Fig. 1 gezeigten Kanalinspektions- und/oder Wartungseinrichtung mit einem in der Zuleitung angeordneten Rückschlagventil.

### Detaillierte Beschreibung der Erfindung

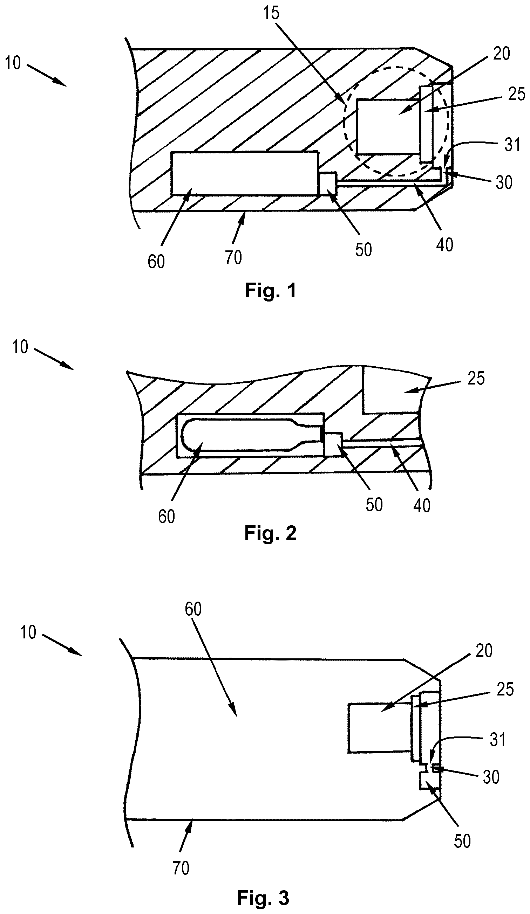

**Fig. 1** zeigt eine erfindungsgemäße Kanalinspektions- und/oder Wartungseinrichtung 10, die hier als Bildaufnahmeeinrichtung ausgebildet ist. Die Inspektions- und/oder Wartungseinrichtung 10 bzw. die Bildaufnahmeeinrichtung weist ein als Kameramodul 20 ausgebildetes Sensorelement auf. Das Kameramodul 20 ist in dem Gehäuse 70 der Inspektions- und/oder Wartungseinrichtung bzw. Bildaufnahmeeinrichtung 10 angeordnet. Axial vor dem Kameramodul 20 ist ein Schutzglas bzw. eine Schutzscheibe 25 angeordnet, die das Kameramodul vor Beschädigung und Verschmutzung schützt.

Die Bildaufnahmeeinrichtung bzw. die Inspektions- und/oder Wartungseinrichtung weist im Inneren einen Druckraum 60 auf, in dem ein unter Druck stehendes Gas aufgenommen ist.

Im Bereich des vorderen Endes der Bildaufnahmeeinrichtung bzw. der Inspektions- und/oder Wartungseinrichtung 10 ist eine Düse bzw. Reinigungsdüse vorgesehen, die zudem axial vor dem Schutzglas 25 angeordnet ist. Die Austrittsöffnung 31 der Düse 30 ist zum Schutzglas 25 hin ausgerichtet, sodass mit dem aus der Düse 30 austretenden Gas das Schutzglas 25 beaufschlagt wird, um das Schutzglas 25 zu reinigen.

Die Düse 30 ist hier über eine druckdichte Zuleitung 40 mit dem Druckraum 60 verbunden, wobei in der Zuleitung 40 ein Ventil 50 vorgesehen ist, mit dem der Druckraum 60 geöffnet bzw. geschlossen wird. Beim Öffnen des Ventils 50, das als elektromechanisches Ventil bzw. als elektromagnetisch betätigbares Ventil ausgestaltet sein kann, wird das unter Druck stehende Gas durch die Zuleitung 40 hindurch bis zur Austrittsöffnung 31 der Düse 30 geführt, wo es unter Druck bzw. Hochdruck dem Schutzglas 25 beaufschlagt wird. Der Betriebsdruck in dem Druckraum kann bis zu mehrere 100 bar betragen. Dieser Druck ist ausreichend, um selbst hartnäckige Verschmutzungen von dem Schutzglas 25 zu lösen bzw. zu entfernen.

Anstelle eines einzigen Druckraums 60, in dem ein unter Druck stehendes Gas aufgenommen ist, können auch zwei getrennte Druckräume vorgesehen sein, wobei in dem einen Druckraum ein unter Druck stehendes Gas und in dem anderen Druckraum ein unter Druck stehendes Fluid aufgenommen sind. Dementsprechend sind auch zwei getrennte Zuleitungen vorgesehen, die dann in Richtung Düse zu einer (gemeinsamen) Zuleitung zusammengeführt sind. Damit kann das aus dem einen Druckraum austretende Gas (beispielsweise Luft) einem aus dem anderen Druckraum austretenden Fluid (beispielsweise Wasser oder ein Reinigungsmittel) zugeführt werden, sodass aus der Austrittsöffnung 31 der Düse 30 ein Gas-Fluid-Gemisch entweicht. Die Ventile 50 zweier solcher Druckräume können unabhängig voneinander geöffnet werden, sodass das Schutzglas 25 wahlweise nur mit dem Fluid, nur mit dem Gas oder mit einem Gas-Fluid-Gemisch beaufschlagt werden kann. In dieser Ausgestaltung ist keine eigene Fluidzuleitung, etwa Wasserzuleitung, zu der Kanalinspektions- und/oder Wartungseinrichtung notwendig. Denn das in dem weiteren Druckraum aufgenommen Fluid, etwa Wasser, wird nur dazu verwendet, um etwa Verkrustungen an dem zu reinigenden Schutzglas anzufeuchten oder aufzuweichen, damit es mit dem Gas leicht bzw. leichter entfernt werden kann. Hierfür reicht eine kleine Menge eines Fluids aus.

In Fig. 1 ist eine Kanalinspektions- und/oder Wartungseinrichtung 10 gezeigt, die als Bildaufnahmeeinrichtung ausgestaltet ist. In einer alternativen Ausgestaltung können hinter dem Schutzglas 25 anstelle des Kameramoduls 20 auch ein oder mehrere Sensoren, beispielsweise dem Temperatursensor oder Abstandssensor, angeordnet sein.

Ferner ist in Fig. 1 eine Lösung gezeigt, bei der lediglich eine Düse 30 vorgesehen ist. In einer alternativen Ausgestaltung können auch mehrere Düsen 30 vorgesehen sein, die vorzugsweise radial um das Schutzglas 25 herum angeordnet sind. Damit kann die Reinigungsleistung der Reinigungseinrichtung noch weiter erhöht werden. Zudem kann so gewährleistet werden, dass das gesamte Schutzglas 25 weitestgehend gleichmäßig und gleich gut gereinigt wird.

Gemäß der Erfindung ist die Düse 30 bzw. sind die Düsen 30 schwenkbar ausgestaltet, sodass der Winkel des aus dem Düsenkanal austretenden Gases relativ zum zu reinigenden Teil des Schutzglases 25 verändert werden kann. Damit können bestimmte Abschnitte des Schutzglases 25 gezielt mit dem Gas beaufschlagt werden. Dies ist insbesondere dann vorteilhaft, wenn sich an dem Schutzglas 25 an einer Stelle besonders hartnäckiger Schmutz abgesetzt hat, der mit einem neben dem Schmutz auftreffenden Gasstrahl nicht oder nicht vollständig entfernt werden kann.

**Fig. 2** zeigt einen Ausschnitt der in Fig. 1 gezeigten erfindungsgemäßen Kanalinspektions- und/oder Wartungseinrichtung 10. Der Druckraum 60 ist hier als Druckbehälter, beispielsweise eine Druckkapsel oder eine Druckflasche, ausgestaltet. Dies hat den Vorteil, dass der Druckbehälter 60 jederzeit ausgewechselt werden kann, beispielsweise wenn der Druckbehälter leer ist.

**Fig. 3** zeigt eine alternative Ausgestaltung einer erfindungsgemäßen Kanalinspektions- und/oder Wartungseinrichtung 10. Im Unterschied zu der in Fig. 1 gezeigten Einrichtung ist bei der in Fig. 3 gezeigten Einrichtung das Gehäuse 70 druckstabil ausgestaltet, wobei in dem Gehäuse das Sensorelement 20, das Ventil 50 und die Düse 30 angeordnet sind. Das Sensorelement 20 kann in einem fluid- und gasdichten Gehäuse untergebracht sein, sodass das Sensorelement 20 hermetisch gegenüber dem Gehäuseinneren des Gehäuses 70 abgedichtet ist.

Bei der in Fig. 3 gezeigten Ausgestaltung bildet das Innere des Gehäuses 70 den Druckraum 60 zur Aufnahme eines unter Druck stehenden Gases. Das Ventil 50 bzw. die Zuführöffnung des Ventils 50 ist direkt dem Druckraum 60 zugewandt bzw. ragt zumindest teilweise in den Druckraum hinein.

Die in Fig. 3 gezeigte Ausgestaltung hat den Vorteil, dass kein separater Druckraum oder Druckbehälter vorgesehen werden muss. In den meisten Fällen weisen die Kanalinspektions- und/oder Wartungseinrichtungen ohnehin ein druckdichtes Gehäuse auf, in dem die einzelnen Komponenten der Kanalinspektions- und/oder Wartungseinrichtung untergebracht sind. In diesem Fall kann der noch zur Verfügung stehende Raum des Gehäuses 70 als Druckraum 60 genutzt werden.

Ferner kann bei der in Fig. 3 gezeigten Ausgestaltung ein Drucksensor vorgesehen sein, mit dem der Druck des Druckraums 60 überwacht werden kann. Die von dem Drucksensor bereitgestellten Messwerte können vorteilhafterweise in zweierlei Hinsicht genutzt werden:
- Einerseits kann bei einem geschlossenen Ventil 50 ein Druckabfall in dem Gehäuse 70 detektiert werden, was auf eine Beschädigung des Gehäuses 70 hindeutet.
- Andererseits können die von dem Drucksensor bereitgestellten Messwerte sowohl bei einem geschlossenen als auch bei einem geöffneten Ventil 50 herangezogen werden, um zu prüfen, ob der Innendruck für ein optimales Reinigungsergebnis hoch genug ist. Sinkt der Innendruck (z.B. während einer Reinigung) unterhalb eines bestimmten Schwellenwertes, kann dies dem Anwender signalisiert werden.

Auch die in Fig. 1 und Fig. 2 gezeigten Druckräume bzw. Druckbehälter 60 können mit einem solchen Drucksensor ausgestattet sein, um den für ein optimales Reinigungsergebnis benötigten Innendruck zu überwachen.

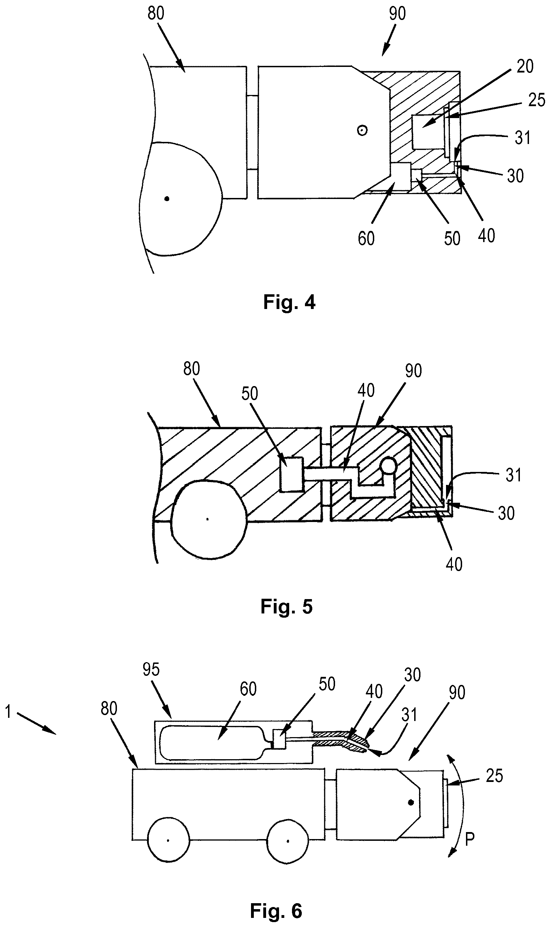

**Fig. 4** zeigt eine erfindungsgemäße Kanalinspektions- und/oder Wartungseinrichtung, die an einem Fahrwagen eines Inspektions- und/oder Wartungssystems angeordnet ist. Die Kanalinspektions- und/oder Wartungseinrichtung weist hier ein Kameramodul 20 auf und ist als schwenkbarer Teil einer Schwenkkopfkamera 90 ausgestaltet.

In einer alternativen Ausgestaltung der Erfindung kann die Kanalinspektions- und/oder Wartungseinrichtung auch an einem Schiebeaal angeordnet werden, mit dem die Inspektions- und/oder Wartungseinrichtung in den Kanal geschoben werden kann.

**Fig. 5** zeigt eine alternative Ausgestaltung eines Kanalinspektions- und/oder Wartungssystems 1, das einen Fahrwagen 80 und eine daran angeordnete Inspektions- und/oder Wartungseinrichtung 10 aufweist. In dem in Fig. 5 gezeigten Beispiel ist der (hier nicht gezeigte) Druckraum in dem Fahrwagen 80 ausgebildet bzw. vorgesehen. Das Ventil 50 ist ebenfalls in dem Fahrwagen 80 angeordnet. Die Düse 30 hingegen ist in dem schwenkbaren Teil der Schwenkkopfkamera 90 angeordnet. Über eine druckdichte Zuleitung 40 ist die Düse in dem schwenkbaren Teil der Schwenkkopfkamera 90 mit dem Ventil 50 in dem Fahrwagen 80 verbunden. Diese Ausgestaltung hat den Vorteil, dass der Druckbehälter und das in dem Druckbehälter aufgenommene Gas nahe an den Radachsen des Fahrwagens 80 angeordnet ist, was zu einer besseren Gewichtsverteilung des Inspektions- und/oder Wartungssystems 1 führt. Zudem kann der Aufbau der Inspektions- und/oder Wartungseinrichtung konstruktiv einfach gehalten werden, weil letztlich nur mehr die Düse 30 und ein Abschnitt der Zuleitung 40 in der Inspektions- und/oder Wartungseinrichtung vorgesehen werden müssen.

Die Koppelstelle zwischen dem Fahrwagen 80 und der Inspektions- und/oder Wartungseinrichtung kann so ausgebildet sein, dass verschiedene Inspektions- und/oder Wartungseinrichtungen wechselweise an dem Fahrwagen angeschlossen werden können. Damit kann ein und derselbe Druckbehälter zusammen mit dem Ventil 50 für unterschiedliche an dem Fahrwagen 80 anschließbaren Inspektions- und/oder Wartungseinrichtungen genutzt werden.

**Fig. 6** zeigt ein erfindungsgemäßes Inspektions- bzw. Wartungssystem 1. Das Inspektions- bzw. Wartungssystem 1 ist hier als Fahrwagen 80 mit einer an dem vorderen Ende angeordneten Schwenkkopfkamera 90 ausgebildet. Die Schwenkkopfkamera 90 kann sowohl um ihre Längsachse gedreht als auch um eine Querachse geschwenkt werden. Die Schwenkrichtung des Kameramoduls der Schwenkkopfkamera 90 ist mit dem Pfeil P angegeben.

Das Kameramodul der Schwenkkopfkamera 90 weist ein Schutzglas bzw. eine Schutzscheibe 25 auf, mit der das Kameramodul und insbesondere das Objektiv vor Schmutz, Feuchtigkeit und Beschädigung geschützt werden. Selbstverständlich können hinter der Schutzscheibe 25 auch weitere Sensorelemente, beispielsweise ein Abstandssensor angeordnet sein.

Auf bzw. an dem Fahrwagen 80 ist hier ein Zusatzmodul 95 angeordnet, das die Reinigungseinrichtung bildet. Das Zusatzmodul 95 weist ein Gehäuse auf, in dem ein Druckbehälter, beispielsweise eine Druckkapsel 60 angeordnet ist. An dem Gehäuse des Zusatzmoduls ist eine Düse 30 angeordnet, die über eine Zuleitung 40 mit einem Ventil 50 gekoppelt ist. Das Ventil 50 verbindet die Öffnung der Drucckapsel 60 mit der Zuleitung 40.

Wie mit Bezug auf Fig. 3 bereits erläutert, kann auch bei dem in Fig. 6 gezeigten Zusatzmodul 95 das Gehäuse des Zusatzmoduls als Druckraum 60 ausgestaltet sein.

Besonders vorteilhaft ist es, wenn das Zusatzmodul 95 lösbar an dem Fahrwagen 80 angeordnet ist. Dadurch kann das als erfindungsgemäße Reinigungseinrichtung ausgebildete Zusatzmodul bei Bedarf vom Fahrwagen abgenommen werden, etwa wenn in dem zu inspizierenden oder zu wartenden Kanal der Platz für ein an dem Fahrwagen angeordnetes Zusatzmodul nicht ausreicht.

Zum Reinigen des Schutzglases bzw. der Schutzscheibe 25 wird die Schwenkkopfkamera 90 in eine Position gedreht, bei der der schwenkbare Teil der Schwenkkopfkamera bzw. das Kameramodul entlang der Pfeilrichtung P nach oben bzw. nach unten geschwenkt werden kann. In dieser Drehposition wird das Kameramodul so weit nach oben geschwenkt, dass ein aus der Austrittsöffnung 31 der Düse 30 austretendes Gas auf das Schutzglas 25 auftreffen kann.

Anstelle der Schwenkkopfkamera 90 können an dem Fahrwagen auch Manipulatoren, etwa ein Greifer oder eine Fräse angeordnet sein. Bei einer entsprechenden dreh- bzw. schwenkbaren Ausgestaltung der Manipulatoren können auch diese zur Austrittsöffnung 31 der Düse 30 hin verschwenkt werden, um eine Reinigung der Manipulatoren durchführen zu können.

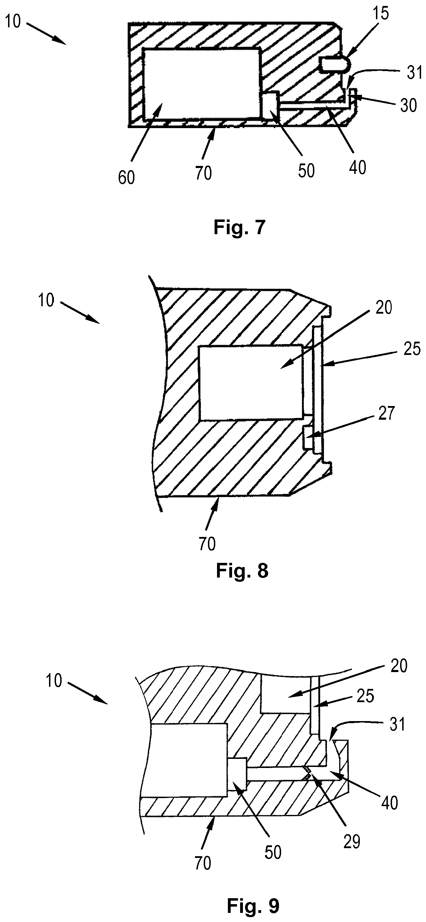

**Fig. 7** zeigt eine erfindungsgemäße Ausgestaltung einer Inspektionseinrichtung 10. Die Inspektionseinrichtung 10 weist hier eine Sensoreinrichtung 15, beispielsweise einen Temperatursensor oder einen Abstandssensor, auf. Die Sensoreinrichtung 15 ist an der vorderen Stirnwand der Inspektionseinrichtung 10 angeordnet. Unterhalb der Sensoreinrichtung 15 befindet sich die Austrittsöffnung 31 der Düse 30, die über eine Zuleitung 40 und einem Ventil 50 mit dem Druckraum 60 der Inspektionseinrichtung gekoppelt ist.

Auch bei der in Fig. 7 gezeigten Ausgestaltung kann das Gehäuse 70 druckdicht ausgestaltet sein und als Druckraum zur Aufnahme eines Gases dienen. Insbesondere bei optischen Sensoren, etwa optischen Abstandssensoren oder Infrarot-Temperatursensoren können bereits leichte Verschmutzungen zu einem ungenauen bzw. nicht verwertbaren Messergebnis führen, sodass die erfindungsgemäße Reinigungseinrichtung nicht nur bei Bedarf, sondern beispielsweise auch in regelmäßigen Abständen genutzt werden kann, um die Sensoren 15 bzw. eine vor der Sensoreinrichtung 15 angeordnete Schutzscheibe zu reinigen.

Sofern zwei Druckräume bzw. Druckbehälter 60 vorgesehen sind, wobei in einem Druckbehälter ein Fluid und in dem anderen Druckbehälter ein Gas gespeichert sind, kann zunächst eine Nassreinigung bzw. ein Befeuchten der Sensoreinrichtung mit dem Fluid und anschließend ein Trocknen oder ein weiteres Reinigen der Sensoreinrichtung mit dem Gas (beispielsweise Luft) durchgeführt werden. Das in dem einen Druckraum aufgenommene Fluid ist hierfür ausreichend, sodass kein zusätzliches Fluid, etwa Wasser, der Kanalinspektions- und/oder Wartungseinrichtung zugeführt werden muss.

**Fig. 8** zeigt eine Ausgestaltung einer erfindungsgemäßen Inspektions- und/oder Wartungseinrichtung 10, wobei hier der Druckraum, das Ventil, die Zuleitung und die Düse der Reinigungseinrichtung nicht gezeigt sind.

Bei der in Fig. 8 gezeigten Ausgestaltung ist an der Innenseite des Schutzglases 25 ein Schmutzsensor 27 angeordnet, mit dem der Verschmutzungsgrad der Schutzscheibe 25 erfasst werden kann. Je nach Größe der Schutzscheibe 25 können auch mehrere Schmutzsensoren verteilt an der Rückseite des Schutzglases 25 angeordnet sein. Als Schmutzsensor 27 kann beispielsweise ein Licht- bzw. Infrarotlicht-Reflexionssensor verwendet werden.

Die Messwerte des Schmutzsensors 27 können verwendet werden, um die Reinigungseinrichtung der Kanalinspektions- und/oder Wartungseinrichtung 10 automatisch zu steuern. So kann beispielsweise die Reinigungseinrichtung automatisch aktiviert werden, wenn der Verschmutzungsgrad einen bestimmten Schwellenwert überschreitet. Damit ist gewährleistet, dass die Schutzscheibe 25 zu jedem Zeitpunkt einen maximalen Verschmutzungsgrad aufweist, der das Sensorelement 20, beispielsweise ein Kameramodul oder sonstige Sensoren, nicht beeinträchtigt.

Das automatische Reinigen der Schutzscheibe 25 basierend auf dem Verschmutzungsgrad der Schutzscheibe 25 ist insbesondere dann vorteilhaft, wenn der Verschmutzungsgrad von dem Anwender des Systems während eines Inspektions- und/oder Wartungsvorganges optisch nicht überprüft werden kann, etwa weil die Inspektions- und/oder Wartungseinrichtung 10 keine Bildaufnahmeeinrichtung aufweist.

Ein weiterer Vorteil der automatischen Reinigung basierend auf dem Verschmutzungsgrad der Schutzscheibe 25 liegt darin, dass das in dem Druckraum 60 aufgenommene Gas optimal genutzt wird und nicht unnötig verschwendet wird. Damit sind längere Inspektions- bzw. Wartungsvorgänge möglich, bevor die Druckkapsel ausgetauscht bzw. der Druckraum aufgefüllt werden muss. Andererseits kann aufgrund der optimierten Verwendung des Gases der Druckraum kleiner ausgestaltet werden, was eine kompaktere Ausgestaltung der Inspektions- und/oder Wartungseinrichtung 10 ermöglicht.

**Fig. 9** zeigt einen Ausschnitt einer erfindungsgemäßen Inspektions- und/oder Wartungseinrichtung 10. Die Austrittsöffnung 31 der Düse 30 ist zum Schutzglas 25 hin ausgerichtet. Die Düse bzw. die Austrittsöffnung 31 ist über eine Zuleitung 40 mit dem Ventil 50 gekoppelt.

Bei der in Fig. 9 gezeigten Ausgestaltung ist in der Zuleitung 40 ein Rückschlagventil 29 angeordnet, welches verhindert, dass Schmutz durch die Eintrittsöffnung 31 über die Zuleitung 40 bis zum Ventil 50 gelangen kann. Das Rückschlagventil 29 kann also einen durch die Austrittsöffnung 31 eingebrachten Schmutz zurückhalten. Zudem ist der Druck des Gases ausreichend, um den von dem Rückschlagventil 29 zurückgehaltenen Schmutz wieder nach außen zu befördern bzw. um die Zuleitung 40 und die Düse zu reinigen.

Alternativ oder zusätzlich zu dem Rückschlagventil 29 in der Zuleitung 40 können auch Düsen vorgesehen sein, die bei Nichtbetrieb geschlossen sind und erst ab einem gewissen Druck, der geringer ist als der Innendruck des Druckraumes, öffnen.

Vorstehend ist die Erfindung anhand einer Kanalinspektions- und/oder Wartungseinrichtung beschrieben worden, die ein Kameramodul und/oder verschiedene Sensoren aufweisen.

In einer Ausgestaltung der Erfindung kann die Inspektions- und/oder Wartungseinrichtung auch als Spülkopf ausgestaltet sein, der mehrere vorzugsweise schräg nach hinten gerichtete Hochdruck-Spüldüsen aufweist, mit denen der Kanal gereinigt wird. Mit seinem hinteren Ende kann der Spülkopf an einen Hochdruckschlauch angekoppelt sein, über den Spülwasser dem Spülkopf zuführbar ist. In dem Spülkopf kann in einem vorderen Ende ein Kameramodul eingebracht sein, mit dem während des Spülvorgangs der Zustand des Kanals überprüft werden kann. Erfindungsgemäß ist es auch hier vorgesehen, dass ein Schutzglas des Kameramoduls mit einer erfindungsgemäßen Reinigungseinrichtung gereinigt wird.

In einer weiteren Ausgestaltung der Erfindung kann die Inspektions- und/oder Wartungseinrichtung als sogenannter Kanalspiegel ausgestaltet sein. Ein Kanalspiegel ist eine Vorrichtung, die in den Schacht (etwa bis zum Boden des Schachtes) des Kanals hinabgelassen werden kann, um von dort aus den Kanal zu inspizieren. Der Kanalspiegel kann in der einfachsten Ausgestaltung einen Umlenkspiegel umfassen. Vorteilhaft ist es jedoch, wenn der Kanalspiegel ein Kameramodul, vorzugsweise eine Kamera mit einem Zoomobjektiv, und eine starke Lichtquelle umfasst. Das Schutzglas des Kameramoduls und/oder die Lichtquelle können bei Bedarf mit einer am oder in dem Kameramodul angeordneten erfindungsgemäßen Reinigungseinrichtung gereinigt werden.

### Bezugszeichen

- 1: Inspektions- und/oder Wartungssystem
- 10: Inspektions- und/oder Wartungseinrichtung (z.B. Spülkopf)
- 15: Sensoreinrichtung
- 20: Sensorelement (z.B. Kameramodul, Temperatursensor, Abstandssensor)
- 25: Schutzglas (Schutzscheibe) des Sensorelements 20 (z.B. des Kameramoduls 20)
- 27: Schmutzsensor (z.B. Licht- bzw. IR-Reflexionssensor)
- 29: Rückschlagventil
- 30: Düse bzw. Reinigungsdüse
- 31: Austrittsöffnung der Düse 30
- 40: Zuleitung (Druckleitung) von dem Ventil 50 zur Düse 30
- 50: Ventil (z.B. elektromechanisches Ventil)
- 60: Druckraum oder Druckbehälter (z.B. Druckkapsel / Druckflasche)
- 70: Gehäuse
- 80: Fahrwagen eines Inspektions- und/oder Wartungssystems
- 90: Schwenkkopfkamera
- 95: Zusatzmodul
- P: Pfeil (Schwenkrichtung des Kamerakopfes)

## Patentansprüche

1. Kanalinspektions- und/oder Wartungseinrichtung (10), aufweisend
- ein Gehäuse (70),
- eine im Gehäuse (70) angeordnete Sensoreinrichtung (15) mit zumindest einem Sensorelement (20) und
- eine Reinigungseinrichtung zum Reinigen zumindest eines Teils der Sensoreinrichtung (15),
wobei die Reinigungseinrichtung aufweist:
- einen Druckraum (60) zur Aufnahme eines unter Druck stehenden Gases, wobei der Druckraum (60) außerhalb des Gehäuses (70) angeordnet ist und eine Druckflasche umfasst,
- zumindest eine Düse (30) mit einer zum reinigenden Teil der Sensoreinrichtung (15) hin ausgerichteten oder ausrichtbaren Austrittsöffnung (31), und
- ein Ventil (50), welches operativ zwischen dem Druckraum (60) und der Düse (30) angeordnet ist, zum Steuern einer Beaufschlagung des zu reinigenden Teils der Sensoreinrichtung (15) mit dem Gas,
wobei
- die zumindest eine Düse (30) außerhalb des Gehäuses (70) angeordnet und schwenkbar ausgestaltet ist, um den Winkel des Gasaustrittskanals der Düse relativ zum zu reinigenden Teil der Sensoreinrichtung (15) zu ändern, und / oder
- die Sensoreinrichtung (15) schwenkbar an der Kanalinspektions- und/oder Wartungseinrichtung angelenkt ist, um den zu reinigenden Teil der Sensoreinrichtung zur Austrittsöffnung (31) der Düse hin auszurichten.

2. Kanalinspektions- und/oder Wartungseinrichtung nach dem vorhergehenden Anspruch, wobei zumindest eine Zuleitung (40) vorgesehen ist, welche den Druckraum (60) mit der zumindest einen Düse (30) verbindet, wobei das Ventil (50) in der Zuleitung (40) angeordnet ist, wobei das Ventil (50) vorzugsweise ein elektromagnetisch betätigbares Ventil umfasst.

3. Kanalinspektions- und/oder Wartungseinrichtung nach einem der vorhergehenden Ansprüche, wobei eine Anzahl von Düsen (30) radial verteilt um die Sensoreinrichtung (15) herum angeordnet ist.

4. Kanalinspektions- und/oder Wartungseinrichtung nach einem der vorhergehenden Ansprüche, wobei die Sensoreinrichtung (15) ein Schutzglas (25) aufweist, das axial vor dem zumindest einen Sensorelement (20) angeordnet ist, und wobei der zu reinigende Teil der Sensoreinrichtung das Schutzglas ist.

5. Kanalinspektions- und/oder Wartungseinrichtung nach dem vorhergehenden Anspruch, wobei hinter dem Schutzglas (25) zusätzlich zu dem zumindest einem Sensorelement (20) zumindest ein Schmutzsensor (27), insbesondere ein Licht- oder Infrarotlicht-Reflexionssensor, angeordnet ist, zum Erfassen eines Verschmutzungsgrades des Schutzglases.

6. Kanalinspektions- und/oder Wartungseinrichtung nach dem vorhergehenden Anspruch, wobei diese eine Steuereinrichtung aufweist, die operativ mit dem Schmutzsensor (27) und mit dem Ventil (50) gekoppelt ist und angepasst ist, das Ventil in Abhängigkeit von dem mit dem Schmutzsensor erfassten Verschmutzungsgrad zu steuern.

7. Kanalinspektions- und/oder Wartungseinrichtung nach einem der vorhergehenden Ansprüche, wobei das Sensorelement (20) zumindest eines aus Kameramodul, Temperatursensor, Abstandssensor, und Kombinationen hiervon umfasst.

## Claims

1. Sewer inspection and/or maintenance device (10), having
- a housing (70),
- a sensor device (15) which is arranged in the housing (70) and has at least one sensor element (20), and
- a cleaning device for cleaning at least part of the sensor device (15),
wherein the cleaning device has:
- a pressure chamber (60) for receiving a pressurized gas, wherein the pressure chamber (60) is arranged outside the housing (70) and comprises a pressure bottle,
- at least one nozzle (30) having an outlet opening (31) which is or can be aligned toward the part of the sensor device (15) to be cleaned, and
- a valve (50) which is operatively arranged between the pressure chamber (60) and the nozzle (30) in order to control the application of the gas to the part of the sensor device (15) to be cleaned,
wherein
- the at least one nozzle (30) is arranged outside the housing (70) and is designed to be pivotable in order to change the angle of the gas outlet channel of the nozzle relative to the part of the sensor device (15) to be cleaned, and/or
- the sensor device (15) is articulated pivotably on the sewer inspection and/or maintenance device in order to align the part of the sensor device to be cleaned with the outlet opening (31) of the nozzle.

2. Sewer inspection and/or maintenance device according to the preceding claim, wherein at least one supply line (40) which connects the pressure chamber (60) to the at least one nozzle (30) is provided, wherein the valve (50) is arranged in the supply line (40), wherein the valve (50) preferably comprises an electromagnetically operable valve.

3. Sewer inspection and/or maintenance device according to either of the preceding claims, wherein a number of nozzles (30) are distributed radially around the sensor device (15).

4. Sewer inspection and/or maintenance device according to any of the preceding claims, wherein the sensor device (15) has protective glass (25) which is arranged axially in front of the at least one sensor element (20), and wherein the part of the sensor device to be cleaned is the protective glass.

5. Sewer inspection and/or maintenance device according to the preceding claim, wherein, in addition to the at least one sensor element (20), at least one dirt sensor (27), in particular a light or infrared light reflection sensor, is arranged behind the protective glass (25) in order to detect the degree of dirtiness of the protective glass.

6. Sewer inspection and/or maintenance device according to the preceding claim, wherein said device has a control device which is operatively coupled to the dirt sensor (27) and to the valve (50) and is suitable for controlling the valve depending on the degree of dirtiness detected by the dirt sensor.

7. Sewer inspection and/or maintenance device according to any of the preceding claims, wherein the sensor element (20) comprises at least one out of a camera module, a temperature sensor, a distance sensor, and combinations thereof.

## Revendications

1. Dispositif d'inspection et/ou de maintenance de canalisations (10), présentant
- un boîtier (70),
- un dispositif capteur (15) disposé dans le boîtier (70) et comportant au moins un élément capteur (20) et
- un dispositif de nettoyage permettant de nettoyer au moins une partie du dispositif capteur (15),
dans lequel le dispositif de nettoyage présente :
- une chambre de pression (60) permettant de recevoir un gaz sous pression, la chambre de pression (60) étant disposée à l'extérieur du boîtier (70) et comprenant une bouteille sous pression,
- au moins une buse (30) comportant une ouverture de sortie (31) orientée ou pouvant être orientée vers la partie du dispositif capteur (15) à nettoyer, et
- une vanne (50) disposée de manière fonctionnelle entre la chambre de pression (60) et la buse (30) et permettant de commander l'exposition de la partie du dispositif capteur (15) à nettoyer au gaz,
dans lequel
- l'au moins une buse (30) est disposée à l'extérieur du boîtier (70) et conçue pour pouvoir pivoter afin de modifier l'angle de la canalisation de sortie de gaz de la buse par rapport à la partie du dispositif capteur (15) à nettoyer, et/ou
- le dispositif capteur (15) est articulé de manière à pouvoir pivoter sur le dispositif d'inspection et/ou de maintenance de canalisations afin d'aligner la partie du dispositif capteur à nettoyer avec l'ouverture de sortie (31) de la buse.

2. Dispositif d'inspection et/ou de maintenance de canalisations selon la revendication précédente, dans lequel au moins une ligne d'alimentation (40) est prévue, laquelle ligne d'alimentation relie la chambre de pression (60) à l'au moins une buse (30), la vanne (50) étant disposée dans la ligne d'alimentation (40), la vanne (50) comprenant de préférence une vanne à actionnement électromagnétique.

3. Dispositif d'inspection et/ou de maintenance de canalisations selon l'une des revendications précédentes, dans lequel un certain nombre de buses (30) sont réparties radialement autour du dispositif capteur (15).

4. Dispositif d'inspection et/ou de maintenance de canalisations selon l'une des revendications précédentes, dans lequel le dispositif capteur (15) présente un verre de protection (25) qui est disposé axialement devant l'au moins un élément capteur (20), et la partie du dispositif capteur à nettoyer étant le verre de protection.

5. Dispositif d'inspection et/ou de maintenance de canalisations selon la revendication précédente, dans lequel au moins un capteur d'encrassement (27), en particulier un capteur de réflexion de lumière ou de lumière infrarouge, est disposé derrière le verre de protection (25), en plus de l'au moins un élément capteur (20), pour la détection d'un degré d'encrassement du verre de protection.

6. Dispositif d'inspection et/ou de maintenance de canalisations selon la revendication précédente, dans lequel ledit dispositif présente un dispositif de commande qui est couplé de manière fonctionnelle au capteur d'encrassement (27) et à la vanne (50) et est adapté pour commander la vanne en fonction du degré d'encrassement détecté par le capteur d'encrassement.

7. Dispositif d'inspection et/ou de maintenance de canalisations selon l'une des revendications précédentes, dans lequel l'élément capteur (20) comprend un module de caméra et/ou un capteur de température et/ou un capteur de distance et/ou des combinaisons de ceux-ci.
